Europäisches Patentamt

European Patent Office

Office européen des brevets

(11) Veröffentlichungsnummer: **0 491 174 A1**

# EUROPÄISCHE PATENTANMELDUNG

(21) Anmeldenummer: **91119662.4**

(22) Anmeldetag: **18.11.91**

(51) Int. Cl.5: **F16J 15/12**, F02F 11/00

(30) Priorität: **18.12.90 DE 4040550**

(43) Veröffentlichungstag der Anmeldung: **24.06.92 Patentblatt 92/26**

(84) Benannte Vertragsstaaten:
**DE FR GB IT**

(71) Anmelder: **REINZ-DICHTUNGS-GMBH**
**Reinzstrasse 3-7**
**W-7910 Neu-Ulm(DE)**

(72) Erfinder: **Ludwig, Josef**
**Abtstrasse 33**
**W-7908 Niederstotzingen(DE)**

(74) Vertreter: **Weber, Otto Ernst, Dipl.-Phys. et al**
**Weber & Heim Hofbrunnstrasse 36**
**W-8000 München 71(DE)**

(54) **Zylinderkopfdichtung mit einer Brennraumdurchgang-Bördeleinfassung.**

(57) Die Erfindung betrifft eine Zylinderkopfdichtung , in dem wenigstens ein Brennraumdurchgang ausgebildet ist, und mit einer metallischen Bördeleinfassung für den Brennraumdurchgang, die zwei über eine Bördelnase miteinander verbundene und beidseitig in den Weichstoff-Grundkörper eingepreßte Schenkel umfaßt. Um Brüche herkömmlicher U-förmiger Bördeleinfassungen zu vermeiden, ist es erfindungsgemäß vorgesehen, daß zumindest einer der beiden Schenkel mit einem Profil versehen ist, das unterschiedlich tief in den Weichstoff-Grundkörper eingepreßte Abschnitte umfaßt.

Die Erfindung betrifft eine Zylinderkopfdichtung der im Oberbegriff des Anspruchs 1 angegebenen Art.

Derartige Zylinderkopfdichtungen sind an den Rändern der Brennraumdurchgänge zum Schutz des Weichstoffmaterials des Grundkörpers vor hohen Temperaturen und Verbrennungsgasen sowie zur Erzielung örtlich hoher Flächenpressungen mit einer Bördeleinfassung versehen. Es ist bekannt, verschiedene Parameter der Bördeleinfassung jeweils an die erforderlichen Bedürfnisse anzupassen. So wird beispielsweise die Breite des Bördels unterschiedlich gewählt und gegebenenfalls mit lokalen Verbreiterungen, etwa in Gestalt eines Kleeblatts versehen, um bestimmte, den jeweiligen Erfordernissen angepaßte Einflußgrößen zu steuern, wie beispielsweise das Setz-, Abdicht-, Gleit- und Bruchverhalten. Derartige unterschiedliche Ausgestaltungen der Bördeleinfassung erfordern oftmals aufwendige Fertigungsmaßnahmen, ohne daß sichergestellt ist, daß die jeweiligen Auslegungen das gewünschte Verhalten im praktischen Einsatz gewährleisten.

Bördelbrüche stellen ein spezielles Problem bei den Zylinderkopfdichtungen der eingangs genannten Art dar. Bördelbrüche treten aus den unterschiedlichsten Gründen auf, deren Ursache im Einzelnen weitgehend unbekannt sind.

Gesichert erscheint lediglich, daß die Härte des Weichstoff-Grundkörper unterhalb der Bördeleinfassung sowie Reib- ebenso wie Gleiteigenschaften von wesentlicher Bedeutung sind.

Der vorliegenden Erfindung liegt die **Aufgabe** zugrunde, eine Zylinderkopfdichtung der eingangs genannten Art bezüglich ihrer Standfestigkeit zu verbessern, insbesondere bezüglich des Abdichtverhaltens (Kaltabdruck) im Bereich der Bördeleinfassung.

Gelöst wird diese Aufgabe durch die kennzeichnenden Merkmale des Anspruchs 1. Vorteilhafte Weiterbildungen der Erfindung sind in den Unteransprüchen angegeben.

Erfindungsgemäß ist demnach eine Profilierung zumindest eines der beiden Bördeleinfassungsschenkel vorgesehen. Ein derartiges Schenkelprofil mit unterschiedlich tief in den Weichstoff-Grundkörper einpreßten Abschnitten läßt sich beim Aufpressen der Bördeleinfassung auf den Weichstoff-Grundkörper mittels eines speziellen Preßwerkzeugs erzielen.

Während die U-Form der Bördeleinfassung herkömmlicher Zylinderkopfdichtungen mit glatten, unprofilierten Bördeleinfassungsschenkeln zu den eingangs genannten Problemen führt, werden erfindungsgemäß Bördelbrüche dadurch verhindert, daß aufgrund der profilierten Bördeleinfassungsschenkel verschieden große Dichtpressungen im Bereich der Bördeleinfassung bei eingebauter Dichtung gezielt einstellbar sind, und zwar entsprechend den jeweiligen Erfordernissen. Mit anderen Worten erlaubt es eine geeignete Variation des Schenkelprofils oder der Schenkelprofile, unterschiedliche Dichtpressungen so einzustellen, daß Bördelbrüche verhindert werden.

Das erfindungsgemäß vorgesehene Bördeleinfassungsschenkel-Profil kann grundsätzlich vielfältige Gestaltungsvarianten aufweisen. Das Ziel, Brüche der Bördeleinfassung zu verhindern, läßt sich beispielsweise mit einem wellenförmigen, zickzackartig verlaufenden oder stufenförmigen Profil, je nach den in der Praxis gestellten Anforderung, erreichen. Gewisse Profilarten weisen jedoch bezüglich anderen, grundsätzlich denkbaren, Vorteile auf. Die bevorzugte Verwendung bestimmter Profilarten hängt von den spezifischen Gegebenheiten der Dichtungsbelastung im Bereich der Bördeleinfassung ab. So verläuft die Belastung der Bördeleinfassung symmetrisch zur Kontur des Brennraumdurchgangs. Deshalb ist es vorteilhafterweise vorgesehen, die unterschiedlich tief in den Weichstoff-Grundkörper eingepreßten Schenkel-Profilabschnitte jeweils der Kontur des Brennraumdurchgangs anzupassen. Im Falle eines kreisrunden Brennraumdurchgangs bedeutet dies, daß Profilabschnitte gleicher Einpreßtiefe im wesentlichen konzentrisch ausgebildet sind.

Weitere vorteilhafte Profilausbildungen ergeben sich aus der Tatsache, daß die Bördeleinfassung innenliegend, also zum Brennraumdurchgang hin aus fertigungstechnischen Gründen eine Bördelnase aufweisen, und daß die Dichtpressungen bei eingebauter Zylinderkopfdichtung direkt am Brennraumdurchgang geringer sind als in angrenzenden, weiter außen liegenden Dichtungsbereichen. Deshalb ist es vorteilhafterweise vorgesehen, daß ein an die Bördelnase angrenzender Profilabschnitt weniger tief in den Weichstoff-Grundkörper eingepreßt ist, als weiter von der Bördelnase beabstandete Profilabschnitte. Weiterhin ist es zur Verhinderung von Bördelbrüchen vorteilhaft, daß sich der an die Bördelnase angrenzende Profilabschnitt im wesentlichen stufenlos an die Bördelnase anschließt.

Gemäß einer besonders vorteilhaften Ausführungsform ist das Schenkelprofil als Stufenprofil ausgebildet, wobei der an die Bördelnase angrenzende Stufenabschnitt weniger tief in den Weichstoff-Grundkörper eingepreßt ist als weiter von der Bördelnase beabstandete Stufenabschnitte. Ein derartiges Stufenprofil erlaubt in besonders einfacher und effizienter Weise die Anpassung der Bördeleinfassung an die jeweiligen Gegebenheiten innerhalb eines Motors. So ist es beispielsweise vorteilhafterweise vorgesehen, daß der an die Bördelnase angrenzende Abschnitt des Stufenprofils sowie ein nachfolgender, tiefer gelegener Abschnitt des Stufenprofils im wesentlichen parallel zum flachen WeichstoffGrundkörper verlaufen und über einen geneigt verlaufenden Stufenabschnitt miteinander verbunden sind. Hierbei handelt es sich also um ein Stufenprofil mit zwei parallel zueinander sowie parallel zur Dichtungsebene verlaufenden Stufenabschnitten, deren geneigt verlaufender Verbindungsabschnitt bezüglich seines Neigungswinkels in einfacher Weise einstellbar ist. Besonders bevorzugt ist ein Neigungswinkel von etwa 30 bis 90° des Verbindungsabschnitts mit Bezug auf die beiden angrenzenden, parallel zueinander verlaufenden Stufenabschnitte.

Eine vorteilhafte Variante dieses Stufenprofils sieht auch einen geneigten Verlauf des unmittelbar an die Bördelnase angrenzenden Stufenabschnitts vor, wobei dessen Neigung geringer gewählt ist als die Neigung des Verbindungsabschnitts. Dieses zweifach geneigte Stufenprofil paßt sich bei eingebauter Zylinderkopfdichtung besonders gut den jeweils auftretenden Dichtpressungen an. Als Neigungswinkel des unmittelbar an die Bördelnase angrenzenden Stufenprofilabschnitts mit Bezug auf die Dichtungsebene ist ein Winkel von bis zu ± 45° bevorzugt.

Eine Anpassung des Stufenprofils an die in der Praxis vorliegenden Dichtpressungsverhältnisse läßt sich in einfacher Weise auch dadurch erzielen, daß die jeweiligen Stufenprofilabschnitte unterschiedlich lang ausgebildet sind, wobei Längen bevorzugt sind zwischen 0,5 und 5,0 mm, und wobei vorteilhafterweise der an die Bördelnase angrenzende Stufenabschnitt kürzer ist als der tiefer gelegene Stufenabschnitt. Schließlich kann auch die Einpresstiefe A der einzelnen Stufenprofilabschnitte vorteilhafterweise variiert werden, vor allem zwischen Einpresstiefen von 0,02 bis 0,5 mm.

Zugunsten einer Herabsetzung von Reibkräften eignet sich das erfindungsgemäß vorgesehene Profil der Schenkel besonders gut zur Erzeugung unterschiedlich starker gleitfähiger Beschichtungsbereiche, die in einfacher Weise durch Walzen erzeugt werden können. Bevorzugt ist die Gleitbeschichtung außenseitig auf dem Profil aufgebracht.

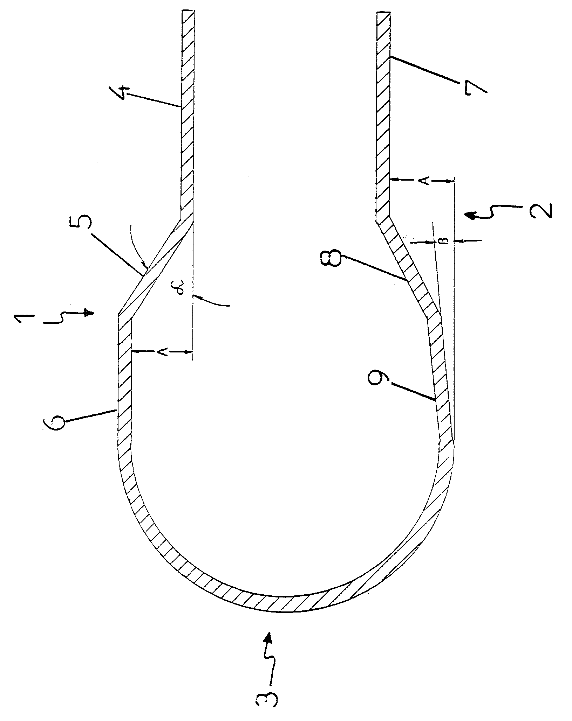

Die erfindungsgemäße profilierte Ausbildung der Bördeleinfassungschenkel erlaubt es, durch unterschiedlich breite Zonen unterschiedlicher Verpressung unterschiedliche Härten des verpreßten Weichstoffs zu erzielen. Ferner werden Reibkräfte gezielt veränderbar, da diese von der Verpressung abhängen, wobei zusätzlich reibungsvermindernde Beschichtungen vorgesehen sein können. Ein Vorteil der Beschichtungen besteht auch in deren Funktion als Mikroabdichtungen der Bördeleinfassung, wodurch die Gasdichtheit der Zylinderkopfdichtung verbessert wird. Nachfolgend soll die Erfindung anhand der Zeichnung näher erläutert werden.

Die einzige Figur der Zeichnung zeigt eine Querschnittsdarstellung einer Ausführungsform der Bördeleinfassung der erfindungsgemäßen Zylinderkopfdichtung.

Die metallische Bördeleinfassung umfaßt Schenkel 1 und 2, welche über eine Bördelnase 3 miteinander verbunden sind. Die Bördeleinfassung ist mittels der Schenkel 1, 2 im Bereich eines Brennraumdurchgangs der Zylinderkopfdichtung auf den nicht dargestellten Weichstoff-Grundkörper aufgepreßt. Beispielsweise ragt das Material des nicht dargestellten Weichstoff-Grundkörper bis in den Bereich der Bördelnase 3 vor.

Die Schenkel 1, 2 der dargestellten Bördeleinfassung sind mit unterschiedlichen Profilen versehen, denen ein treppenförmiger Verlauf gemeinsam ist.

Der in der Figur oben liegende Schenkel 1 umfaßt demnach einen Profil- oder Stufenabschnitt 4, der stärker in den Weichstoff-Grundkörper eingepreßt ist als ein Profilabschnitt 6, der stufenlos unmittelbar an die Bördelnase 3 angrenzt und mit dem tiefer gelegenen Abschnitt 4 über einen geneigten Abschnitt 5 verbunden ist. Außerdem ist der tiefer gelegene Abschnitt 4, der parallel zu dem höher gelegenen Abschnitt 6 verläuft, länger als dieser. Der Niveauunterschied zwischen den beiden parallel zueinander verlaufenden Stufenabschnitten 4 und 6 ist in der Figur durch A und zugehörige Pfeile bezeichnet. Der Neigungswinkel $\alpha$ des Verbindungsabschnitts 5 mit Bezug auf die beiden parallel zueinander verlaufenden Profilabschnitte 4 und 6 beträgt in etwa 34°. Bevorzugt ist ein Neigungswinkel $\alpha$ von 30° bis 90°.

Das Profil des anderen Schenkels 2 unterscheidet sich von dem Profil des Schenkels 1 dadurch, daß auch der an die Bördelnase 3 angrenzende Stufenabschnitt geneigt ausgebildet ist, und zwar mit einem Neigungswinkel $\beta$, der vorzugsweise kleiner ist als der Neigungswinkel des Abschnitts 8, welcher den tiefer liegenden Profilabschnitt 7 mit dem geneigten höher liegenden Abschnitt 9 verbindet. Beim Schenkel 2 beträgt der Niveauunterschied zwischen dem tiefergelegenen Abschnitt 7 und dem Ende des höher gelegenen Abschnitts 9, das in die Bördelnase 3 übergeht, ebenfalls A (siehe Schenkel 1). Der Neigungswinkel $\beta$ des weniger tief in den Weichstoff-Grundkörper eingepreßten Profilabschnitts 9 mit Bezug auf den parallel zur Dichtungsebene verlaufenden tiefer gelegenen Profilabschnitt 7 beträgt ca. 11°. Bevorzugt ist ein Winkel $\beta$ bis zu ± 45°.

Durch die Profilierung der Schenkel 1 und 2 läßt sich die Bördeleinfassung der Zylinderkopfdichtung an die jeweiligen Praxisgegebenheiten mit großer Variabilität anpassen, und zwar auch durch eine unterschiedliche Profilierung der beiden Schenkel 1 und 2.

## Patentansprüche

1. Zylinderkopfdichtung mit einem flachen WeichstoffGrundkörper, in dem wenigstens ein Brennraumdurchgang ausgebildet ist, und einer metallischen Bördeleinfassung für den Brennraumdurchgang, die zwei über eine Bördelnase miteinander verbundene und beidseitig in den Weichstoff-Grundkörper eingepreßte Schenkel umfaßt, wobei zumindest einer der beiden Schenkel mit einem Profil versehen ist, das unterschiedlich tief in den Weichstoff-Grundkörper eingepreßte Abschnitte umfaßt, dadurch **gekennzeichnet,**
daß das Profil ein Stufenprofil ist,
daß der an die Bördelnase (3) angrenzende Abschnitt (9) des Stufenprofils weniger stark geneigt verläuft als ein sich daran anschließender Abschnitt (8), daß der Abschnitt (8) den an die Bördelnase (3) angrenzenden Abschnitt (9) mit einem nachfolgend tiefer gelegenen Abschnitt (7) verbindet und
daß der tiefer gelegene Abschnitt (7) im wesentlichen parallel zum flachen Weichstoff-Grundkörper verläuft.

2. Zylinderkopfdichtung nach Anspruch 1, **dadurch gekennzeichnet**, daß die unterschiedlich tief in den Weichstoff-Grundkörper eingepreßten Profilabschnitte (4-9) jeweils der Kontur des Brennraumdurchgangs folgen sowie quer zu dieser Kontur aufeinanderfolgend angeordnet sind.

3. Zylinderkopfdichtung Anspruch 1 oder 2, **dadurch gekennzeichnet** , daß ein an die Bördelnase (3) angegrenzender Profilabschnitt (6, 9) weniger tief in den Weichstoff-Grundkörper eingepreßt ist als weiter von der Bördelnase (3) beabstandete Profilabschnitte (4, 5, 7, 8).

4. Zylinderkopfdichtung nach Anspruch 3, **dadurch gekennzeichnet**, daß sich der an die Bördelnase (3) angrenzende Profilabschnitt (6, 9) im wesentlichen stufenlos an die Bördelnase (3) anschließt.

5. Zylinderkopfdichtung nach einem der vorhergehenden Ansprüche. **dadurch gekennzeichnet**, daß der an die Bördelnase (3) angrenzende Abschnitt (6) des Stufenprofils sowie ein nachfolgender, tiefer gelegener Abschnitt (4) des Stufenprofils im wesentlichen parallel zum flachen Weichstoff-Grundkörper verlaufen und über einen geneigt verlaufenden Stufenabschnitt (5) miteinander verbunden sind.

6. Zylinderkopfdichtung nach Anspruch 1, **dadurch gekennzeichnet,** daß der tiefer gelegene Stufenabschnitt (4, 7) länger ist als der an die Bördelnase (3) angrenzende Stufenabschnitt (6, 9).

7. Zylinderkopfdichtung nach einem der vorhergehenden Ansprüche. **dadurch gekennzeichnet,** daß beide Schenkel (1, 2) der Bördeleinfassung mit dem Profil versehen sind.

8. Zylinderkopfdichtung nach Anspruch 7 , **dadurch gekennzeichnet,** daß die Profile auf den beiden Schenkeln (1, 2) unterschiedlich ausgebildet sind.

9. Zylinderkopfdichtung nach einem der vorhergehenden Ansprüche, **dadurch gekennzeichnet,** daß die Dicke der Profilabschnitte im wesentlichen gleich ist.

10. Zylinderkopfdichtung nach einen der Ansprüche 1 bis 4, **dadurch gekennzeichnet**, daß die verschiedenen Profilabschnitte (4-9) stufenlos ineinander übergehen.

11. Zylinderkopfdichtung nach einem der vorhergehenden Ansprüche, **dadurch gekennzeichnet,** daß die unterschiedlich tief in den Weichstoff-Grundkörper eingepreßten Profilabschnitte (4, 6 und 7, 9) jeweils über einen gerade ausgebildeten Profilabschnitt (5 bzw. 8) miteinander verbunden sind.

12. Zylinderkopfdichtung nach einem der Ansprüche 3 bis 11, **dadurch gekennzeichnet**, daß der Winkel ($\alpha$), um den der Verbindungsabschnitt (5) bezüglich der beiden angrenzenden Abschnitte (4, 6) geneigt ist, größer ist als der Winkel ($\beta$), um den der an die Bördelnase (3) angrenzende Abschnitt (9) bezüglich des nachfolgenden tiefer gelegenen Abschnitts (7) geneigt ist.

| Europäisches Patentamt | EUROPÄISCHER RECHERCHENBERICHT | Nummer der Anmeldung |
|---|---|---|
| | | EP 91 11 9662 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 013 726 (REINZ DICHTUNGS-GESELLSCHAFT) <br> * Abbildungen 15A-15-17-18 * <br> --- | 1-9 | F16J15/12 <br> F02F11/00 |
| A | DE-A-2 736 599 (GOETZEWERKE F. GOETZE AG) <br><br> * Seite 5, Absatz 3 -Absatz 6; Abbildungen * <br> --- | 1,2,4,5, 6 | |
| A | FR-A-1 538 222 (REINZ DICHTUNGS-GESELLSCHAFT,) <br> * Abbildungen 2,4,9,10 * <br> --- | 1,2 | |
| A | FR-A-2 192 675 (GOETZEWERKE F. GOETZE AG) <br> * Abbildungen * <br><br> ----- | 1 | |

|  | RECHERCHIERTE SACHGEBIETE (Int. Cl.5) |
|---|---|
| | F02F <br> F16J |

Der vorliegende Recherchenbericht wurde für alle Patentansprüche erstellt

| Recherchenort | Abschlußdatum der Recherche | Prüfer |
|---|---|---|
| DEN HAAG | 10 MAERZ 1992 | MOUTON J.M.M.P. |